(19) **Europäisches Patentamt**

**European Patent Office**

**Office européen des brevets**

(11) Veröffentlichungsnummer: **0 376 261**
**A2**

(12) **EUROPÄISCHE PATENTANMELDUNG**

(21) Anmeldenummer: **89123975.8**

(22) Anmeldetag: **27.12.89**

(51) Int. Cl.⁵: **C08L 67/02, C08K 13/02,**
**//(C08K13/02,3:22,5:02)**

(30) Priorität: **29.12.88 CH 4844/88**

(43) Veröffentlichungstag der Anmeldung:
**04.07.90 Patentblatt 90/27**

(84) Benannte Vertragsstaaten:
**CH DE FR GB IT LI NL**

(71) Anmelder: **CIBA-GEIGY AG**
**Klybeckstrasse 141**
**CH-4002 Basel(CH)**

(72) Erfinder: **Breitenfellner, Franz, Dr.**
**Konrad-Adenauer-Strasse 56**
**D-6140 Bensheim 1(DE)**
Erfinder: **Kainmüller, Thomas, Dr.**
**Am Kümmelberg 1**
**D-6145 Lindenfels/Odenwald(DE)**

(74) Vertreter: **Zumstein, Fritz, Dr. et al**
**Bräuhausstrasse 4**
**D-8000 München 2(DE)**

(54) **Flammwidrige Polyesterformmasse.**

㉗ Flammwidrige Polyesterformmassen enthaltend

(A) 70-95 Gew.% eines spezifischen Polyestergemisches aus Polyethylenterephthalat, Polybutylenterephthalat-Copolyester mit 3-30 Mol% einer aliphatischen Dicarbonsäure mit bis zu 36 C-Atomen und gegebenenfalls Polybutylenterephthalat und

(B) 30-5 Gew.% eines flammhemmenden Zusatzes aus einer bromhaltigen organischen Verbindung und einer Antimonverbindung ausgewählt aus der Gruppe $Sb_2O_5$, $NaSbO_3$ oder $Sb_2O_3$ mit einer mittleren Teilchengrösse von nicht kleiner als 2 µm eignen sich insbesondere zur Herstellung von teilkristallinen Formkörpern mittels Spritzguss. Die Formkörper zeichnen sich durch eine helle Eigenfarbe aus bei vergleichbar guten thermischen, mechanischen und elektrischen Eigenschaften.

EP 0 376 261 A2

EP 0 376 261 A2

## Flammwidrige Polyesterformmasse

Die Erfindung betrifft flammwidrige Polyesterformmassen, deren Verwendung zur Herstellung von teilkristallinen Formkörpern mit heller Eigenfarbe mittels Spritzguss sowie die daraus hergestellten Formkörper.

Polyestermischungen auf Basis von Polyethylenterephthalat und Copolyestern aus 1,4-Butandiol, Terephthalsäure und einer aliphatischen Dicarbonsäure sind z.B. aus der US 4,131,595 bekannt. In flammwidrig ausgerüsteter Form zeigen sie jedoch bei der Verarbeitung, insbesondere mittels Spritzguss, eine zunehmende Graufärbung der Schmelze.

Für die Flammhemmung von thermoplastischen Polyestern werden den Formmassen organische Halogenverbindungen, insbesondere Bromverbindungen, in Kombination mit Antimonverbindungen, insbesondere Antimontrioxid, zugesetzt. Die durchschnittliche Teilchengrösse des üblicherweise verwendeten $Sb_2O_3$ beträgt etwa 1 $\mu$m. Auch Antimonpentoxid kommt zum Einsatz. In colloidaler Form weist es dabei eine mittlere Teilchengrösse von unter 0,1 $\mu$m auf. Diese besonders feinteiligen Antimonverbindungen weisen wegen ihrer kleinen durchschnittlichen Teilchengrösse eine hohe synergistische Wirkung auf die Flammhemmung von Kunststoffen sowie einen geringen Einfluss auf die mechanischen Eigenschaften der Formmassen auf, weshalb sie bevorzugt zum Einsatz kommen.

Bei Verwendung dieser Antimonverbindungen in Polyestermischungen, welche Polyethylenterephthalat und bestimmte Copolyester enthalten, beobachtet man eine Graufärbung der Schmelze mit zunehmender Verarbeitungsdauer. Diese Graufärbung wird in Anwesenheit von Phosphiten, die derartigen Formmassen oft als Stabilisatoren zugesetzt werden, noch verstärkt. Die aus solchen Formmassen hergestellten Formkörper weisen daher eine graue Eigenfarbe und nicht die gewünschte helle Eigenfarbe auf.

Es wurde nun überraschenderweise gefunden, dass dieses Problem durch die Verwendung von Antimonverbindungen mit einer mittleren Teilchengrösse von nicht weniger als 2 $\mu$m gelöst werden kann.

Gegenstand vorliegender Erfindung sind flammwidrige Polyesterformmassen enthaltend

(A) 70-95 Gew.% eines Polyestergemisches aus

(A1) 50-95 Gew.% Polyethylenterephthalat (PET) oder einem Blend aus Polyethylenterephthalat und Polybutylenterephthalat (PBT), wobei Polyethylenterephthalat mindestens 50 Gew.% der Komponente (A1) darstellt, und

(A2) 50-5 Gew.% eines Polybutylenterephthalat-Copolyesters (Co-PBT) aus 1,4-Butandiol, Terephthalsäure und 3-30 Mol% einer aliphatischen Dicarbonsäure der Formel I

$$HO_2C-R^1-CO_2H \qquad (I),$$

worin $R^1$ $C_1$-$C_{34}$-Alkylen bedeutet, und

(B) 30-5 Gew.% eines flammhemmenden Zusatzes aus

(B1) 50-85 Gew.% einer bromhaltigen organischen Verbindung und

(B2) 50-15 Gew.% einer Antimonverbindung ausgewählt aus der Gruppe $Sb_2O_5$, $NaSbO_3$ oder $Sb_2O_3$ mit einer mittleren Teilchengrösse von nicht kleiner als 2 $\mu$m, wobei sich die Gewichtsprozente der Komponenten (A1) und (A2) auf das Gesamtgewicht der Komponente (A), die Gewichtsprozente der Komponenten (B1) und (B2) auf das Gesamtgewicht der Komponente (B) und die Gewichtsprozente der Komponenten (A) und (B) auf das Gesamtgewicht der Komponenten (A) und (B) beziehen.

Unter mittlerer Teilchengrösse wird anmeldungsgemäss der mittels Laser-Granulometer (Messprinzip Cilas) durch Laser-Lichtbeugung ermittelte Medianwert der Korngrössenverteilung verstanden, d.h. 50 Gew.% der Partikel liegen in ihrer Grösse oberhalb bzw. unterhalb dieses Wertes. Eine weitere Möglichkeit ist die Messung mittels eines Sedigraphs während der Sedimentation.

Obwohl gemäss Stand der Technik im allgemeinen in Polyestermischungen Antimonverbindungen kleiner Korngrösse (mittlere Teilchengrösse $\leq$ 1 $\mu$m) eingesetzt werden, sind einige Literaturstellen bekannt, welche bestimmte Polyestermischungen mit einer mittleren Teilchengrösse von über 1 $\mu$m offenbaren.

Die JP-OS 96,159/1984 beschreibt Stoffgemische enthaltend einen thermoplastischen Polyester, eine organische Halogenverbindung, $Sb_2O_3$ mit einer mittleren Teilchengrösse von nicht weniger als 1 $\mu$m und einen Ester einer organischen Säure, insbesondere ein endverkapptes Polycaprolacton. Spezifisch offenbart sind Stoffgemische, in denen die Polyesterkomponente Polyethylenterephthalat oder ein Polyethylenterephthalat/Polybutylenterephthalat-Gemisch ist. Bei Verwendung dieser Stoffgemische wird eine geringere Gratbildung bei der Herstellung der Formteile beobachtet. Der gleiche Vorteil wird auch in der verwandten JP-OS 96,158/1984 geltend gemacht. Sie beschreibt Stoffgemische enthaltend einen thermoplastischen Polyester, ein halogenhaltiges Flammschutzmittel mit einem Molekulargewicht von mindestens 1000 und $Sb_2O_3$ mit einer mittleren Teilchengrösse von 1-10 $\mu$m. Spezifisch offenbart sind Gemische, worin die Polyesterkomponente Polyethylenterephthalat oder Polybutylenterephthalat ist.

2

Die JP-OS 217,738/1984 beschreibt Stoffgemische enthaltend ein synthetisches Harz, ein Flammschutzmittel und ein Antimonoxid mit einer mittleren Teilchengrösse von 1-4 μm. Die Stoffgemische zeichnen sich durch einen grösseren Temperaturverarbeitungsbereich beim Spritzgiessen sowie durch gute mechanische Eigenschaften und einen besseren Oberflächenaspekt aus. Das synthetische Harz kann aus einer Vielzahl von Thermoplasten oder Duroplasten gewählt werden, wobei Polyalkylenterephthalate, insbesondere mit Kristallisationsbeschleunigern modifiziertes Polyethylenterephthalat, bevorzugt werden.

Die EP-A 174,826 beansprucht Polybutylenterephthalat-Stoffgemische enthaltend ein Flammschutzmittel und ein Antimontrioxid mit einer mittleren Teilchengrösse von mindestens 1 μm. Besonders bevorzugt sind faserverstärkte Gemische. Um die dabei beobachtete Deformation der Formteile zu verhindern, wird den Gemischen vorzugsweise Polycarbonat beigegeben, wodurch allerdings die Schmelzstabilität der Gemische stark reduziert wird. Dieses Problem wird gemäss der EP-A 174,826 durch den Einsatz von Antimontrioxid der oben definierten Teilchengrösse gelöst.

Die GB-A 2,186,878 beschreibt Stoffgemische enthaltend thermoplastische Polyester, organische Halogenide und Natriumantimonat mit einer mittleren Teilchengrösse von 0,5-50 μm und mit einem charakteristischen Röntgenbeugungsdiagramm. Das spezifische Natriumantimonat wird durch Erhitzen von Natriumantimonat-Ausgangsmaterial erhalten. Als Polyester werden unter anderem auch Polyethylen- und Polybutylenterephthalat sowie deren Gemische erwähnt. Die Stoffgemische weisen gute mechanische Eigenschaften und eine erhöhte thermische Stabilität auf.

Keine der oben erwähnten Veröffentlichungen enthält einen Hinweis auf die durch die vorliegende Erfindung zu lösende Problematik der Grauverfärbung bestimmter flammwidriger Polyestermassen bzw. auf die erfindungsgemässe Lösung des Problems durch Verwendung von Antimonverbindungen bestimmter Teilchengrösse.

Im Gegensatz zu den wenigen oben erwähnten Publikationen, welche verschiedene Vorzüge der Stoffgemische mit erhöhter mittlerer Teilchengrösse der darin enthaltenen Antimonverbindungen schildern, werden sonst gemäss Stand der Technik durchwegs Antimonverbindungen mit kleiner mittleren Teilchengrösse eingesetzt.

Als Nachteile bei Verwendung von grösseren Antimonoxid-Teilchengrössen führt z.B. die JP-OS 198,543/1983, gemäss welcher Antimonoxid mit einer mittleren Teilchengrösse von 0,1-0,6 μm eingesetzt werden soll, reduzierte mechanische Eigenschaften und verschlechterte Flammhemmung an; beides wird bei den erfindungsgemässen Formmassen nicht festgestellt.

I. Touval beschreibt in Plastics Compounding, Mai/Juni 1985, Seiten 106-117 den Einfluss der Teilchengrösse von $Sb_2O_3$, $Sb_2O_5$ und $NaSbO_3$ auf die Farbstärke und auf die physikalischen Eigenschaften der damit flammwidrig ausgerüsteten Kunststoffe. Danach sind gerade von den gröberen $Sb_2O_3$-Typen keine besonderen Weissaufhellungseffekte zu erwarten, welche eine Produkteverfärbung überdecken könnten. Im Bereich der mittleren Teilchengrösse von 0,1 bis 10 μm ist der Weisspigmentierungseffekt bzw. die Farbstärke desto grösser, je kleiner die Teilchengrösse ist.

Für die erfindungsgemässen Formmassen geeignete Polyester-Komponenten (A1) und (A2) sind bekannt. Die Polybutylenterephthalat-Copolyester-Komponente (A2) ist bevorzugt kristallin bzw. teilkristallin und weist in diesem Fall insbesondere Schmelzpunkte von mindestens 150°C auf. Sie kann jedoch auch in amorpher Form vorliegen, wobei dann der Copolyester bevorzugt eine Glasumwandlungstemperatur von unter 40°C, insbesondere von unter 25°C, aufweist. Die Viskositätszahl (nach DIN 53728/3) der Polyester (A1) und (A2) beträgt vorzugsweise mindestens 50 (cm³/g), insbesondere mindestens 70 (cm³/g).

Die erfindungsgemässen Formmassen enthalten vorzugsweise 75-90 Gew.% des Polyestergemisches (A) und 25-10 Gew.% des flammhemmenden Zusatzes (B).

Das Polyestergemisch (A) besteht vorzugsweise aus 70-90 Gew.% der Komponente (A1) und aus 30-10 Gew.% der Komponente (A2). Dabei enthält die Komponente (A1) vorzugsweise mindestens 65, insbesondere mindestens 80 Gew.% Polyethylenterephthalat.

Beim Polybutylenterephthalat-Copolyester (A2) können die eingesetzten Cokomponenten statistisch verteilt sein, oder es kann sich um Blockpolymere handeln. Bevorzugt werden statistische Copolymere.

Die Copolyesterkomponente (A2) enthält vorzugsweise 5-25, insbesondere 7-25, besonders bevorzugt 10-20 Mol% der aliphatischen Dicarbonsäure der Formel I.

Der $C_1$-$C_{34}$-Alkylenrest der Verbindungen der Formel I kann verzweigt oder vorzugsweise geradkettig sein. Beispiele geeigneter Dicarbonsäuren der Formel I sind Pentylmalonsäure, Octadecylmalonsäure, Glutarsäure, Bernsteinsäure, Octadecylbernsteinsäure, Pimelinsäure, Suberinsäure, Adipinsäure, Trimethyladipinsäure, Azelainsäure, Sebazinsäure, Dodecandisäure, Dodecandicarbonsäure, Pentadecandicarbonsäure, Octadecandicarbonsäure und Dimersäuren. Dimersäuren sind Dimerisierungsprodukte von ungesättigten Carbonsäuren, z.B. Oelsäuren. Solche Copolyester auf der Basis von Polybutylenterephthalat sind z.B. in der DE-OS 2,340,959 beschrieben.

3

Bevorzugt werden Dicarbonsäuren der Formel I, worin $R^1$ geradkettiges $C_4$-$C_{10}$-Alkylen bedeutet.

Besonders bevorzugte Dicarbonsäuren sind Dodecandisäure, Azelainsäure oder insbesondere Sebazinsäure oder Adipinsäure.

Der flammhemmende Zusatz (B) der erfindungsgemässen Formmassen besteht vorzugsweise aus 65-80 Gew.% der Komponente (B1) und aus 35-20 Gew.% der Komponente (B2).

Flammschutzmittel auf der Basis von bromhaltigen organischen Verbindungen sind bekannt. Beispiele geeigneter Flammschutzmittel sind bromierte Polystyrole, z.B. Polytribromstyrol, Polypentabromstyrol wie z.B. Pyrocheck® 60 PB und 68 PB der Fa. Ferro, Decabrombiphenyl, Tetrabrombiphenyl, Hexabromdiphenylether, Octabromdiphenylether, Decabromdiphenylether, Tetrabromdiphenylsulfid, Hexabromdiphenylsulfon, Tetrabrombenzimidazolon, bromierte α,ω-Alkylenbisphthalimide, z.B. N,N'-Ethylen-bis-tetrabromphthalimid, das von der Fa. Ethyl Corporation als Saytex® BT-93 vertrieben wird, bromierte Poly(benzylacrylate), wie Poly(pentabrombenzylacrylat) (FR-1025 der Fa. Eurobrom), oligomere bromierte Carbonate, insbesondere von Tetrabrombisphenol A abgeleitete Carbonate, gegebenenfalls endverkappt mit Phenoxyresten wie z.B. Bc-52 oder bromierten Phenoxyresten, wie z.B. BC-58 der Fa. Great Lakes oder bromierte Epoxidharze, wie z.B. die Produkte F-2400 und F-2300 der Fa. Makteshim (Beer-Sheva, Israel). Weitere organische Bromverbindungen sind z.B. in der DE-OS 2,242,450 beschrieben.

Bevorzugte Komponenten (B1) der erfindungsgemässen Formmassen sind bromierte α,ω-Alkylenbisphthalimide, oligomere bromierte Carbonate, bromierte Epoxidharze oder insbesondere bromierte Polystyrole oder bromierte Poly(benzylacrylate).

Am meisten bevorzugt ist Polytribromstyrol.

Die Antimonverbindung (B2) ist vorzugsweise $NaSbO_3$ oder insbesondere $Sb_2O_5$.

Die Antimonverbindungen (B2) weisen vorzugsweise eine mittlere Teilchengrösse von 2-40, insbesondere von 2-25, besonders bevorzugt von 3-25 μm. Besonders bevorzugte mittlere Teilchengrössen sind 3 μm oder 15 μm für $Sb_2O_3$, 2 μm für $NaSbO_3$ und 3 μm oder 18 μm für $Sb_2O_5$.

Die definitionsgemässen Antimonverbindungen können als solche in Pulverform, oder in Form eines "Master-Batch", z.B. 80%-ig in Polyethylen- oder Polybutylenterephthalat, der Formmasse beigegeben werden.

Die erfindungsgemässen Formmassen können zusätzlich zu den Komponenten (A) und (B) noch (C) 5-50, vorzugsweise 10-40 Gew.%, bezogen auf das Gesamtgewicht der Formmasse, Glasfasern enthalten. Diese können mit einem Haftvermittler beschichtet sein, um deren Bindungen an den Polyester zu verbessern.

Die in den erfindungsgemässen Formmassen verwendeten Polyester sind bekannt und handelsüblich oder sie können nach bekannten Polykondensationsverfahren der Technik hergestellt werden.

Die Herstellung der erfindungsgemässen Formmassen erfolgt ebenfalls nach in der Technik üblichen Methoden durch Einarbeiten der Zusätze in den Polyester, z.B. durch Umgranulieren.

Es können auch weitere übliche Zusätze zugegeben werden, z.B. weitere Füllstoffe, wie beispielsweise Talk, Glimmer, Metallpulver, Kieselsäureaerosol, Kaolin, Calciumcarbonat, Dolomit, Xonotlit, Magnesiumsulfat, Calciumphosphat, Silikate oder Glaskugeln, anorganische oder organische Pigmente, optische Aufheller, Mattierungsmittel, Gleitmittel, Entformungshilfsmittel, kristallisationsfördernde Mittel, Antioxidantien, Lichtschutzmittel und Verarbeitungsstabilisatoren.

Besonders bevorzugte solche Zusätze sind Füllstoffe, wie Kaolin, Talk oder Dolomit, welche bis zu ca. 35 Gew.% der Gesamtmasse betragen können, sowie weitere Zusätze zur Verbesserung der elektrischen Eigenschaften, der Flammhemmung sowie der Reduzierung der Korrosionswirkung an Kontaktmetallen, wie Xonotlit oder Tricalciumphosphat. Diese werden vorzugsweise in Mengen von ca. 1-4, bzw. ca. 1 Gew.% bezogen auf die Gesamtmasse eingesetzt. Die Gesamtmenge dieser kornförmiger Zusätze sollte vorzugsweise nicht 40 Gew.% der Gesamtmasse überschreiten, während die Gesamtmenge der Glasfasern und der kornförmigen Füllstoffe vorzugsweise nicht höher als 60 Gew.%, insbesondere nicht höher als 50 Gew.% der Gesamtmasse sein sollte.

Geeignete Antioxidantien und Stabilisatoren sind beispielsweise sterisch gehinderte Phenole, wie z.B. Irganox® 1035 oder Irganox® 1076 der Ciba-Geigy, Phosphite, wie z.B. Tris(nonylphenyl)phosphit (Irgafos® TNPP der Ciba-Geigy), Irgafos® 168 der Ciba-Geigy oder Ultranox® 626 der Borg-Warner. Geeignete Lichtschutzmittel sind beispielsweise Benztriazole, wie z.B. Tinuvin® 326 der Ciba-Geigy.

Die Formmassen können nach gebräuchlichen Formgebungsverfahren wie Giessen, Pressen, Spritzgiessen und Extrudieren zu Gebrauchsgegenständen aller Art verarbeitet werden. Beispiele für solche Gegenstände sind technische Apparateteile, Apparategehäuse, Haushaltgeräte, Sportgeräte, Elektroisolationen, Automobilteile, Schaltungen, Platten, Filme und Halbzeuge, die spanabhebend verformt werden können. Ein besonderes Anwendungsgebiet ist die Herstellung von Formkörpern bzw. Umhüllungen für die Elektrotechnik und Elektronik.

Die erfindungsgemässen Formmassen eignen sich besonders zum Spritzgiessen. Ein weiterer Gegenstand der Erfindung ist daher die Verwendung der erfindungsgemässen Formmassen zur Herstellung von teilkristallinen Formkörpern mit heller Eigenfarbe mittels Spritzguss bei Formtemperaturen von 90 bis 150, insbesondere von 110 bis 140° C.

Gegenstand der Erfindung sind auch Formkörper hergestellt aus den erfindungsgemässen Formmassen.

Die folgenden Beispiele erläutern die Erfindung. Die in den Beispielen angegebenen Gew.%-Mengen der Einzelkomponenten sind immer auf die Gesamtmasse bezogen.

Beispiele 1-4:

Mit Hilfe eines BUSS-Laborkneters (46 mm Schneckendurchmesser) werden bei einer Temperatur von 270° C die in Tabelle 1 angeführten Komponenten compoundiert. Nach dem Granulieren und Trocknen des Granulates erfolgt die Spritzgiessverarbeitung zu Proben mit den Abmessungen 60 x 12,5 x 1,6 mm. Die Verarbeitungsbedingungen auf einer Spritzgiessmaschine Arburg Allrounder betragen

Zylindertemperatur: 270° C
Werkzeugtemperatur: 130° C
Zykluszeit: 18 sec

Die erfindungsgemässen Formmassen ergeben Formteile mit einer hellen Eigenfarbe sowie einer glatten Oberfläche (Beispiele 3 und 4). Die helle Eigenfarbe bleibt auch bei fortschreitender Verarbeitungsdauer erhalten.

Formkörper der Vergleichsbeispiele 1 und 2 weisen eine graue Eigenfarbe auf, die sich mit zunehmender Verarbeitungsdauer verstärkt.

Tabelle 1

| Beispiel-Nr. | Zusammensetzung | Bemerkung |
|---|---|---|
| 1 (Vergleich) | 42,0 Gew.% PET (1)<br>10,5 Gew.% Co-PBT mit 17,6 M% Sebazinsäure (2)<br>12,5 Gew.% Polytribromstyrol<br>5,0 Gew.% $Sb_2O_3$, mittlere Teilchengrösse 1 $\mu$m (3)<br>30,0 Gew.% Glasfasern | Die Formkörper weisen eine graue Eigenfarbe auf, die sich mit zunehmender Verarbeitungsdauer verstärkt |
| 2 (Vergleich) | wie 1 jedoch<br>5,0 Gew.% $Sb_2O_5$, mittlere Teilchengrösse 0,03 $\mu$m (4) | wie 1 |
| 3 | wie 1 jedoch<br>5,0 Gew.% $Sb_2O_3$, mittlere Teilchengrösse 15 $\mu$m (3) | Formkörper mit heller Eigenfarbe |
| 4 | wie 1 jedoch<br>5,0 Gew.% $Sb_2O_5$, mittlere Teilchengrösse 18 $\mu$m (3) | wie 3 |

(1) Viskositätszahl nach DIN 53 728, Teil 3: 125 $cm^3$/g
(2) Viskositätszahl nach DIN 53 728, Teil 3: 165 $cm^3$/g
(3) Gemessen mittels Laser-Lichtbeugung an Granulometer Cilas HR 850 der Fa. Cilas-Alcatel.
(4) Gemäss Angaben des Herstellers.

Beispiele 5-11:

In gleicher Weise werden die in Tabelle 2 angeführten Zusammensetzungen granuliert. Bei einer Zylindertemperatur von 270° C und einer Werkzeugtemperatur von 130° C werden zur Beurteilung der Verfärbung Proben mit den Abmessungen 60 x 12,5 x 1,6 mm (Zykluszeit 18 sec) hergestellt. Ferner erfolgt die Verarbeitung zu Probekörpern für die Ermittlung der Biegefestigkeit (Abmessungen 180 x 10 x 4 mm, Zykluszeit 35 sec) sowie für die Ermittlung der Brennbarkeit (125 x 12,5 x 1,6 mm, Zykluszeit 28 sec).

Formkörper aus den erfindungsgemässen Formmassen (Beispiele 6-8 und 10 und 11) zeigen nach UL-94 selbstverlöschende Eigenschaften der Klasse V-O und zeichnen sich durch eine gute Festigkeit aus. Sie erweisen sich bei der Verarbeitung als farbstabil. Im Gegensatz dazu erhält man gemäss den Beispielen 5 und 9 (Vergleich) Formteile mit grauer Eigenfarbe, welche mit zunehmender Verarbeitungsdauer noch stärker ausgeprägt wird.

## Tabelle 2

| Beispiel-Nr. | Zusammensetzung | Brenn-barkeit UL 94 | Biegefestigkeit nach DIN 53453 $(N/mm^2)$ | Bemerkung |
|---|---|---|---|---|
| 5 (Vergleich) | 42,0 Gew.% PET (1)<br>5,5 Gew.% PBT (2)<br>5,5 Gew.% Co-PBT mit 17,6 M% Sebazinsäure (3)<br>5,0 Gew.% Dolomit<br>2,0 Gew.% Xonotlit<br>8,0 Gew.% Polytribromstyrol<br>2,0 Gew.% $Sb_2O_5$, mittlere Teilchen-grösse 0,03 µm (4)<br>30, 0 Gew.% Glasfasern | V-0 | 195 | Formteile weisen eine graue Eigenfarbe auf |
| 6 | wie 5 jedoch<br>2,0 Gew.% $Sb_2O_5$, mittlere Teilchen-grösse 18 µm (5) | V-0 | 193 | Formteile weisen eine helle Eigenfarbe auf |
| 7 | wie 5 jedoch<br>2,0 Gew.% $Sb_2O_3$, mittlere Teilchen-grösse 15 µm (5) | V-0 | 195 | wie 6 |
| 8 | wie 5 jedoch<br>2,0 Gew.% $NaSbO_3$, mittlere Teilchen-grösse 2 µm (5) | V-0 | 194 | wie 6 |

EP 0 376 261 A2

Tabelle 2 (Fortsetzung)

| Beispiel-Nr. | Zusammensetzung | Brenn-barkeit UL 94 | Biegefestigkeit nach DIN 53453 (N/mm²) | Bemerkung |
|---|---|---|---|---|
| 9 (Vergleich) | wie 5 jedoch 2,0 Gew.% Sb₂O₃, mittlere Teilchen-grösse 1 µm (4) | V-0 | – | Mit zunehmender Ver-arbeitungsdauer er-gibt sich eine zu-nehmende Graufärbung der Proben |
| 10 | wie 5 jedoch 2,0 Gew.% Sb₂O₃, mittlere Teilchen-grösse 3 µm (4) | V-0 | – | Formteile weisen eine hell-beige Eigenfarbe auf, die auch nach 35 Spritzzyklen erhal-ten bleibt |
| 11 | wie 5 jedoch 2,0 Gew.% Sb₂O₅, mittlere Teilchen-grösse 3 µm (4) | V-0 | – | wie 10 |

(1) Viskositätszahl nach DIN 53 728 Teil 3: 125 cm³/g
(2) Viskositätszahl nach DIN 53 728 Teil 3: 110 cm³/g
(3) Viskositätszahl nach DIN 53 728 Teil 3: 165 cm³/g
(4) Gemäss Angaben des Herstellers
(5) Gemessen mittels Laser-Lichtbeugung an Granulometer Cilas HR 850 der Fa. Cilas-Alcatel

EP 0 376 261 A2

Beispiele 12-14:

In gleicher Weise werden die in Tabelle 3 angeführten Zusammensetzungen granuliert. Bei einer Zylindertemperatur von 270°C und einer Werkzeugtemperatur von 85°C werden zur Beurteilung der Verfärbung Probekörper mit den Abmessungen 60 x 12,5 x 1,6 mm (Zykluszeit 18 sec.) hergestellt.

Formkörper aus den erfindungsgemässen Formmassen (Beispiele 13 und 14) zeichnen sich durch eine hell-beige Farbe aus und erweisen sich bei der Verarbeitung als farbstabil. Gemäss dem Vergleichsbeispiel 12 werden andererseits nur Formkörper mit hell-grauer Eigenfarbe erhalten, die mit zunehmender Verarbeitungsdauer dunkler wird.

Tabelle 3

| Beispiel-Nr. | Zusammensetzung (6) | Bemerkung |
|---|---|---|
| 12 (Vergleich) | 40 GT PET (5)<br>40 GT CoPBT mit 5M% Sebazinsäure (1)<br>13 GT oligomeres bromiertes Carbonat<br>4 GT $Sb_2O_3$, mittlere Teilchengrösse: 1 μm (4) | Formkörper weisen eine hellgraue Eigenfarbe auf, die mit zunehmender Verarbeitungsdauer dunkler wird |
| 13 | 40 GT PET (5)<br>40 GT CoPBT mit 3M% Sebazinsäure (2)<br>13 GT oligomeres bromiertes Carbonat<br>4 GT $Sb_2O_3$, mittlere Teilchengrösse: 3 μm (4) | Formkörper weisen eine hellbeige Eigenfarbe auf, die sich mit zunehmender Verarbeitungsdauer nur leicht verdunkelt |
| 14 | 40 GT PET (5)<br>40 GT CoPBT mit 7M% Sebazinsäure (3)<br>13 GT oligomeres bromiertes Carbonat<br>4 GT $Sb_2O_3$, mittlere Teilchengrösse: 3 μm (4) | Formkörper weisen eine hellbeige Eigenfarbe auf, die auch mit zunehmender Verarbeitungsdauer erhalten bleibt |

(1) Viskositätszahl nach DIN 53 728, Teil 3: 151 $cm^3/g$
(2) Viskositätszahl nach DIN 53 728, Teil 3: 146 $cm^3/g$
(3) Viskositätszahl nach DIN 53 728, Teil 3: 165 $cm^3/g$
(4) Gemäss Angaben des Herstellers
(5) Viskositätszahl nach DIN 53 728, Teil 3: 125 $cm^3/g$
(6) GT: Gewichtsteile

**Ansprüche**

1. Flammwidrige Polyesterformmassen enthaltend
(A) 70-95 Gew.% eines Polyestergemisches aus
(A1) 50-95 Gew.% Polyethylenterephthalat oder einem Blend aus Polyethylenterephthalat und Polybutylenterephthalat, wobei Polyethylenterephthalat mindestens 50 Gew.% der Komponente (A1) darstellt, und
(A2) 50-5 Gew.% eines Polybutylenterephthalat-Copolyesters aus 1,4-Butandiol, Terephthalsäure und 3-30 Mol% einer aliphatischen Dicarbonsäure der Formel I
$HO_2C-R^1-CO_2H$     (I),
worin $R^1$ $C_1$-$C_{34}$-Alkylen bedeutet, und
(B) 30-5 Gew.% eines flammhemmenden Zusatzes aus (B1) 50-85 Gew.% einer bromhaltigen organischen Verbindung und
(B2) 50-15 Gew.% einer Antimonverbindung ausgewählt aus der Gruppe $Sb_2O_5$, $NaSbO_3$ oder $Sb_2O_3$ mit einer mittleren Teilchengrösse von nicht kleiner als 2 μm,

wobei sich die Gewichtsprozente der Komponenten (A1) und (A2) auf das Gesamtgewicht der Komponente (A), die Gewichtsprozente der Komponenten (B1) und (B2) auf das Gesamtgewicht der Komponente (B) und die Gewichtsprozente der Komponenten (A) und (B) auf das Gesamtgewicht der Komponenten (A) und (B) beziehen.

2. Formmasse nach Anspruch 1 enthaltend 75-90 Gew.% der Komponente (A) und 25-10 Gew.% der Komponente (B).

3. Formmasse nach Anspruch 1, worin das Polyestergemisch (A) aus 70-90 Gew.% der Komponente (A1) und aus 30-10 Gew.% der Komponente (A2) besteht.

4. Formmasse nach Anspruch 1, worin Polyethylenterephthalat mindestens 65, vorzugsweise mindestens 80 Gew.% der Komponente (A1) darstellt.

5. Formmasse nach Anspruch 1, worin die Komponente (A2) 5-25, vorzugsweise 10-20 Mol% der aliphatischen Dicarbonsäure der Formel I enthält.

6. Formmasse nach Anspruch 1, worin $R^1$ geradkettiges $C_4$-$C_{10}$-Alkylen bedeutet.

7. Formmasse nach Anspruch 1, worin die aliphatische Dicarbonsäure Dodecandisäure, Azelainsäure oder inbesondere Sebazinsäure oder Adipinsäure ist.

8. Formmasse nach Anspruch 1, worin der flammhemmende Zusatz (B) aus 65-80 Gew.% der Komponente (B1) und aus 35-20 Gew.% der Komponente (B2) besteht.

9. Formmasse nach Anspruch 1, worin die Komponente (B1) ein bromiertes α,ω-Alkylenbisphthalimid, ein oligomeres bromiertes Carbonat, ein bromiertes Epoxidharz oder insbesondere ein bromiertes Polystyrol oder ein bromiertes Poly(benzylacrylat) ist.

10. Formmasse nach Anspruch 1, worin die Antimonverbindung (B2) $NaSbO_3$ oder insbesondere $Sb_2O_5$ ist.

11. Formmasse nach Anspruch 1, worin die Antimonverbindung eine mittlere Teilchengrösse von 2-40, insbesondere von 2-25 μm aufweist.

12. Formmasse nach Anspruch 1 enthaltend zusätzlich zu den Komponenten (A) und (B) noch (C) 5-50, vorzugsweise 10-40 Gew.% Glasfasern, bezogen auf das Gesamtgewicht der Formmasse.

13. Verwendung der Formmasse nach Anspruch 1 zur Herstellung von teilkristallinen Formkörpern mit heller Eigenfarbe mittels Spritzguss bei Formtemperaturen von 90-150° C.

14. Formkörper hergestellt aus der Formmasse nach Anspruch 1.